# EUROPÄISCHE PATENTSCHRIFT

(11) **EP 3 954 257 B1**
(45) Veröffentlichungstag und Bekanntmachung des Hinweises auf die Patenterteilung: **30.10.2024**
(21) Anmeldenummer: 20190510.6
(22) Anmeldetag: 11.08.2020
(51) Int. Cl.: A47J 31/36, A47J 31/38

(54) **MECHANISCHE BRÜHGRUPPE**
MECHANICAL BREWING UNIT
GROUPE MÉCANIQUE D'INFUSION

(43) Veröffentlichungstag der Anmeldung: 16.02.2022
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 0 756 842
- EP-B1- 0 756 842
- WO-A1-2005/079641
- DE-A1- 10 125 245
- DE-A1- 3 422 432
- US-A1- 2018 360 257

## Beschreibung

### Technisches Gebiet der Erfindung

Die vorliegende Erfindung bezieht sich auf eine mechanische Brühgruppe zum Einsatz in einer Espresso- oder Kaffeemaschine. Die vorliegende Erfindung bezieht sich ebenfalls auf eine Espresso- und Kaffeemaschine, umfassend eine solche mechanische Brühgruppe.

### Stand der Technik

Espresso- und Kaffeemaschinen können unterschieden werden hinsichtlich ihres Automatisierungsgrades. Demnach gibt es eine Gruppe der sogenannten "Siebträgermaschinen" bzw. der "Halbautomaten", die Gruppe der "Vollautomaten" und diverse Varianten dazwischen, auch als Hybridmaschinen bezeichnet. Bei den halbautomatischen Espresso- und Kaffeemaschinen umfasst die Herstellung eines oder mehrerer Tassen Kaffees oder Espressos ein oder mehrere Schritte, welche nicht vollautomatisch ablaufen, sondern von einem Bediener individuell ausführbar sind. Insbesondere umfasst eine Siebträgermaschine einen abnehmbaren Siebträger, in welchen eine gewünschte Menge an gemahlenem Kaffeepulver eingefüllt und darin verpresst werden kann, um ein gleichmässig hohes und gleichmässig verdichtetes Kaffeebett zu erzeugen. Dem Barista obliegt es die Sorte, Menge und Mahlgrad des Kaffeepulvers, die Art des eingesetzten Brühsiebs und die für das Tampern (Verpressen) aufzuwendende Kraft zu bestimmen. Das befüllte Brühsieb bzw. der Siebträger mit dem eingesetzten Brühsieb kann dann in der Kaffeemaschine in eine vorgesehene Halterung eingespannt werden. Das Durchpressen des Brühwassers durch das verpresste Kaffeepulver kann mittels eines von dem Barista betätigbaren Handhebel erfolgen. Es sind Varianten bekannt, bei denen dies von einem gekoppelten Hydrauliksystem und/oder einem Kniehebelsystem unterstützt wird. Die mit einer solchen Maschine erreichbare Kaffeequalität ist hinsichtlich Aromas und Crema sehr hoch, ist allerdings in starkem Masse von den Fähigkeiten und dem Gespür des Bedieners abhängig. Nur ein erfahrener Barista kann mittels einer solchen technisch einfachen Siebträgermaschine ein weitgehend gleichbleibendes hohes Brühergebnis erreichen.

Um eine weitere Variante zu nennen, sind Hybridmaschinen bekannt, bei welchen der mit einem Brühsieb versehene Siebträger in eine vorgesehene Siebträgerhalterung einsetzbar ist, aber die Befüllung des Brühsiebs automatisch in der Kaffeemaschine erfolgt, d.h. dass Kaffeemehl aus einer integrierten Kaffeemühle dosiert in das Brühsieb gelangt. Die Entfernung des Kaffeetresters bzw. Kaffeekuchens nach der Kaffeeherstellung kann dann manuell erfolgen. Die Bewegung des Brühkolbens während des Brühvorgangs kann mittels einer Antriebseinheit weitgehend automatisiert erfolgen.

Vollautomaten erreichen ein noch höheres Mass der Automatisierung, so dass sämtliche Schritte der Kaffeeherstellung automatisch entsprechend der von einem Bediener gewählten Kaffeesorte erfolgt. Dabei können stabile Qualitäten erreicht werden, allerdings für einen Bediener ergibt sich keine Möglichkeit der direkten Einflussnahme.

Die Herstellung eines Espressos erfordert die Einhaltung einer Reihe von Parametern, welche durch entsprechende Norm festgelegt sind. Diese legt für einen Espresso fest, dass 22,5 bis 27,5 ml heisses Wasser mit einer Temperatur zwischen 88°C und 94°C unter Druck von 8 bis 10 bar während einer Durchlaufzeit von 20 bis 30 Sekunden durch 6,5 bis 7,5 g gleichmässig verdichtetes Kaffeemehl gepresst wird. Ferner ist bekannt, dass die erzeugte Qualität auch in hohem Masse von dem Durchfluss-Widerstand des Kaffeemehls abhängig ist, welcher wiederum von dem Mahlgrad, der Höhe des Kaffeemehls in dem Brühsieb und dem Grad der Verdichtung des eingefüllten Kaffeemehls beeinflusst ist. Die hohen Drücke bei der Espresso-Herstellung erfordern es, dass die Konstruktion einer Espressomaschine eine gewisse Robustheit zeigt und insbesondere Hilfsmittel bereitstehen, um die hohen Drücke zu erreichen und während des Brühvorgangs aufrechtzuhalten.

Aus EP 2 811 876 ist eine den Hybridmaschinen zugeordnete Kaffeemaschine mit einem für den Brühvorgang in eine dafür vorgesehene Halterung einsetzbaren Siebträger bekannt. Ferner ist ein Verteilersieb-Element vorgesehen, umfassend ein Verteilersieb, welches mit dem Siebträger einen Brühraum begrenzt und wobei durch das Verteilersieb heisses, unter Druck stehendes Wasser in den Brühraum eingeführt wird. Das Verteilersieb-Element ist zwischen einer ersten Position, in welcher der Siebträger offen ist und mit Kaffeemehl aus einer integrierten Kaffeemühle mittels entsprechender Einrichtungen gefüllt werden kann und einer zweiten Position hin- und her bewegbar, in welcher das Verteilersieb-Element den Siebträger druckdicht verschliesst. Zur Bewegung des Verteilersieb-Elements zwischen der ersten und der zweiten Position ist eine elektrisch oder hydraulisch arbeitende Antriebseinheit vorgesehen.

Aus CN 201578093 ist eine Kaffeemaschine bekannt, bei welcher der Brühkolben mittels eines handbetätigbaren Hebels in Wirkverbindung mit einem Kniehebelmechanismus in eine Brühposition bewegbar ist. Mittels eines komplizierten Systems einer Kulissenführung wird der Brühkolben nicht nur vertikal, sondern auch horizontal bewegt, um in einen Siebträger eingeführt werden zu können, in welchen an einem integrierten Mühlenausgang dosiert Kaffeemehl eingefüllt ist. Der Kniehebelmechanismus kann über eine maximale Streckung hinausbewegt werden, um in einer Rastposition fixiert zu sein, in welcher der Brühkolben gegen die während des druckbeaufschlagten Brühvorgangs wirkende Kraft gehalten wird.

Aus EP 0 634 903 ist eine Brüheinrichtung für eine Haushalts-Espressomaschine bekannt, bei welcher der Siebträger zum Befüllen horizontal in eine Befüllposition bzw. in eine Brühposition schwenkbar bzw. bewegbar ist. Die Brüheinrichtung umfasst einen von Hand vertikal gegen eine Stellkraft in eine Arretierungsstellung verschiebbaren Kolben, welcher in den in Brühposition befindlichen Siebträger einführbar ist und mit diesem eine Druckkammer bildet. Hierbei ist ein Arretierungshebel vorgesehen, welcher mit der Kolbenstange ein lösbares Reibgesperre bildet, um die Kolbenstange mittels Klemmverbindung nahezu stufenlos zu positionieren.

Aus DE 34 22 432 A ist eine handgesteuerte Espresso-Maschine bekannt, wobei ein Filterkolben mittels eines Betätigungshebels in senkrechter Richtung bewegbar ist. Eine an dem Betätigungshebel vorgesehene Sperrklinke kann in Eingriff gebracht werden mit Sperr- und Verriegelungszähnen einer Verriegelungsstange, um den Filterkolben in einer gewünschten Stellung zu halten.

Aus US 2018360257 A1 ist eine Kaffeemaschine bekannt mit einem mittels eines Betätigungshebels gegen eine Federkraft betätigbaren Kolben. Ferner ist zwischen dem Betätigungshebel und der Kolbenstange ein Exzenterelement angeordnet, welcher die Wirkverbindung zwischen Betätigungshebel und Kolben unterbrechen kann.

### Zusammenfassung der Erfindung

Ausgehend von diesem Stand der Technik ist die Aufgabe der vorliegenden Erfindung, eine mechanische Brühgruppe zum Einsatz in Espresso- und Kaffeemaschinen vorzusehen, welche als Modul in unterschiedlichen Typen von Espresso- und Kaffeemaschinen einsetzbar ist. Insbesondere bietet die erfindungsgemässe Brühgruppe mit einer von einem Bediener betätigbaren Mechanik die Möglichkeit direkt und unmittelbar an der Herstellung eines Espressos oder Kaffees hoher Qualität beteiligt zu sein und erzeugt so ein individuelles Erlebnis. Ferner erlaubt die erfindungsgemässe mechanische Brühgruppe aber auch eine ausreichend einfache Bedienbarkeit, für welche kein hoher Kraftaufwand erforderlich ist, um den Druck zur Erzeugung eines Espressos zu erzeugen und zu halten.

Die erfindungsgemässe Brühgruppe für eine Espresso- und Kaffeemaschine umfasst eine Rahmenstruktur, einen Handhebel, welcher an der Rahmenstruktur drehbar bzw. schwenkbar gelagert ist, und ein Brühkolben-Element, welches mittels eines Hebelmechanismus in Wirkverbindung mit dem Handhebel steht, wobei das Brühkolben-Element zwischen einer ersten Position und mindestens einer zweiten Position entlang einer vertikalen Achse bewegbar ist. Ferner umfasst das Brühkolben-Element ein Verteilersieb, welches in der zweiten Position des Brühkolben-Elements mit einem in einer Halterung eingesetzten Siebträger einen Brühraum begrenzt und heisses unter Druck stehendes Brühwasser durch das Verteilersieb in den Brühraum einführbar ist, und eine Kolbenstange, an welcher das Verteilersieb verbindbar ist. Des Weiteren sind Arretierungsmittel vorgesehen, welche ausgebildet sind, um das Brühkolben-Element in mindestens einer einstellbaren Position entlang der vertikalen Achse zu halten bzw. aus einer einstellbaren Halteposition freizugeben.

Insbesondere ist das Verteilersieb mit der Kolbenstange des Brühkolben-Elements mittels einer Schraubverbindung lösbar verbindbar. An dem Brühkolben-Element sind Dichtmittel vorgesehen, so dass dieses beim wiederholten Einfahren in den Siebträger mit diesem den Brühraum druckdicht schliesst. Das Brühkolben-Element ist zwischen einer ersten Position, in welcher der Siebträger offen ist und Kaffeemehl in ein in dem Siebträger aufgenommenes Brühsieb einfüllbar ist und einer zweiten Position hin und her bewegbar, In der zweiten Position einer Pressstellung ist der Brühraum druckdicht verschlossen. Eine Kopplung zwischen dem Handhebel, dem Hebelmechanismus und dem Brühkolben-Element sowie den Arretierungsmitteln bietet dem Bediener eine manuelle Handhabung der Espresso- und Kaffeeherstellung, wobei insbesondere durch die Arretierungsmittel auftretender hoher Druck gehalten wird.

Die Arretierungsmittel sind vorgesehen, um das Brühkolben-Element nahezu stufenlos in einstellbare Positionen entlang der vertikalen Achse zu arretieren und aus dieser wieder freizugeben. Insbesondere wird das Brühkolben-Element in der zweiten Position gehalten, welche der Pressstellung des Brühkolben-Elements entspricht.

Der Handhebel vermittelt dem Bedienpersonal den Eindruck einer unmittelbaren Beteiligung an dem Herstellungsprozess, wie dies als vorteilhaft bei Halbautomaten empfunden wird, wobei aber auch einzelne Schritte der Kaffeeherstellung zumindest teilweise automatisch ablaufen können. So wird eine gleichbleibende Qualität des Kaffeeerzeugnisses garantiert.

Beispielsweise kann an die Bewegung des Handhebels und des umfassten Hebelmechanismus eine Aktivierung einer lösbaren Sperre gekoppelt sein, die eine Dosiereinrichtung für die Einfüllung von gemahlenem Kaffeepulver in den geöffneten Siebträger aktiviert bzw. deaktiviert. Wird die Sperre gelöst, gelangt eine definierte Menge an frisch gemahlenem Kaffeepulver in den bereitgestellten Siebträger. Insbesondere bewirkt die Bewegung des Handhebels und des gekoppelten Hebelmechanismus eine definierte Bewegung des Brühkolben-Elements, so dass das in den Siebträger eingebrachte Kaffeepulver verpresst und das Brühkolben-Element für einen Brühvorgang in Brühstellung gebracht wird.

In der Rahmenstruktur der Brühgruppe ist eine Drehachse lagerbar, an der der Handhebel angeordnet ist, so dass dieser drehbar bzw. schwenkbar mit der Rahmenstruktur verbunden ist. Dabei kann der Handhebel in Form einer Gabel ausgebildet sein, deren Schenkel zu beiden Seiten der Rahmenstruktur drehbar gelagert sind. Der Handhebel kann an einem proximalen Ende mit einem Griff ausgestattet sein und ist an einem distalen Ende drehbar bzw. schwenkbar an der Rahmenstruktur gelagert. Insbesondere kann der Handhebel gegen eine Federkraft schwenkbar sein, wie dies noch erläutert wird.

Der mit dem Handhebel in Wirkverbindung stehende Hebelmechanismus umfasst mindestens ein erstes Verbindungselement und ein zweites Verbindungselement. Ein erstes Ende des ersten Verbindungselements ist an der Drehachse aufgenommen, so dass eine Bewegung des Handhebels sich auf das erste Verbindungselement überträgt. Ein zweites Ende des ersten Verbindungselements ist mit einem ersten Ende des zweiten Verbindungselements mittels eines ersten Gelenks verbunden, wobei ein zweites Ende des zweiten Verbindungselements mittels eines zweiten Gelenks mit dem Brühkolben-Element verbunden ist. Bei einer vertikalen Bewegung des Handhebels von einer Startstellung, z.B. einer oberen Stellung bzw. Ruheposition, nach unten in eine Endstellung, überträgt der Hebelmechanismus die Bewegung des Handhebels auf das Brühkolben-Element, so dass dieses ebenfalls vertikal nach unten geführt wird. Alternativ kann die Startstellung auch eine untere Position sein und die Endstellung eine obere Position, d.h. die Betätigung des Handhebels erfolgt in entgegengesetzter Richtung zu der Bewegung des Brühkolben-Elements.

In einer Ausführungsform erfolgt die Bewegung des Handhebels aus der Startstellung entgegen einer Widerstandskraft, beispielsweise ausgehend von einem als Federelement ausgebildeten Rückstellelement oder einem hydraulischen System. Die davon ausgehende Rückstellkraft ermöglicht ein automatisches Rückstellen des Handhebels in die Startstellung, wenn dieser freigegeben wird. Das erste Verbindungselement und das zweite Verbindungselement, das erste Gelenk und das zweite Gelenk sowie die Rahmenstruktur sind derart ausgelegt, dass hohe Kräfte aufgenommen werden können.

In einer Ausführungsform kann die vertikale Bewegung des Brühkolben-Elements geführt sein, so dass eine stabile Bewegung ermöglicht ist. So kann individuell die Bewegung des Handhebels in unterschiedlichen Geschwindigkeiten von dem Benutzer ausgeführt werden. Die Bewegung des Handhebels kann werksseitig hinsichtlich der Widerstandskraft und der Freigabe bzw. Blockade eingestellt werden. Insbesondere wird der Handhebel erst freigegeben, wenn der Mahlvorgang und das Einfüllen in das bereitgestellte Brühsieb beendet ist. Das mit dem Handhebel und dem Hebelmechanismus in Wirkverbindung stehende Brühkolben-Element kann vorzugsweise nicht nur von der ersten Position in die zweite Position bewegt werden, sondern auch in mindestens eine Zwischenposition, in welcher das in das Brühsieb eingefüllte Kaffeepulver definiert verpressbar ist. Die von dem Brühkolben-Element aufzubringende Kraft für das Verdichten des eingefüllten Kaffeemehls ist bevorzugt einstellbar. Beispielsweise kann ein einstellbares Federelement zur Einstellung bzw. Begrenzung der Tamperkraft vorgesehen sein, welche mittels des Handhebels auf das Brühkolben-Element übertragbar ist. So kann beim Kontakt des Brühkolben-Elements auf das Mahlgut mittels des Federelements, auch bezeichnet als Temperfeder, die Temperkraft definiert aufgebaut werden. In Abhängigkeit der sich im Brühsieb befindlichen Menge, bzw. von der Höhe des Kaffeekuchens, können unterschiedliche Positionen angefahren werden. Wird die Federkraft des einstellbaren Federelements erreicht, kann der weitere Verpressvorgang gestoppt werden, so dass der Weg des Brühkolben-Elements in Richtung des Siebträgers limitiert ist, bereitgestellt durch die Funktionsweise der Arretierungsmittel

Gekoppelt an die Bewegung des Handhebels kann das Brühkolben-Element mindestens in die zweite Position bewegt werden, in welcher das Verteilersieb des Brühkolben-Elements mit dem Siebträger den Brühraum begrenzt und diesen druckdicht verschliesst. Mittels entsprechender Zuführeinrichtungen kann heisses, unter Druck stehendes Wasser, dosiert und unmittelbar auf kurzem Strömungsweg in den Brühraum eingeleitet werden und durch ein dort eingefülltes Kaffeemehl, verdichtet, gepresst werden. Hierfür ist an dem Brühkolben-Element vorzugsweise eine seitliche Einleitung für das von einer Heisswasservorrichtung erzeugten Brühwassers mit Druck vorgesehen. Nachdem das Brühwasser das Kaffeemehl durchströmt hat, kann stromabwärts des Brühraums der gebrühte Kaffee oder Espresso über einen Auslauf in eine oder mehrere bereitgestellte Tassen abgegeben werden.

Der eigentliche Brühvorgang kann variabel gestaltet sein, wobei die Stellung des Brühkolben-Elements als ein Schliessorgan für den Brühraum den diversen Kaffeezubereitungsarten anpassbar ist. Insbesondere ist vorgesehen, dass der Brühraum nach einem ersten Brühvorgang leicht geöffnet wird. Insbesondere durch eine geeignete Konstruktion und Aufbau der Arretierungsmittel kann eine definierte Stellung bzw. Rückstellung des Brühkolben-Elements beim Aufbau des Brühdrucks erreicht werden. Bei einer minimalen einstellbaren Bewegung des Brühkolben-Elements in der arretierten Stellung, z.B. in der Brühstellung, kann in den Arretierungsmitteln eine Gegenkraft erzeugt werden, welche genutzt werden kann, um nach dem Brühvorgang den Kaffeekuchen auszupressen. Das selbsttätige Rückstellen des Brühkolben-Elements leitet eine erneute Verpressung des sogenannten Kaffeetresters ein, um einen trockenen und damit leichter zu entfernenden Kaffeekuchen zu erzeugen. Insbesondere basiert dies auf einer gewissen Elastizität der Arretierungsmittel, welche bei Freigabe entsprechend federnd zurückgestellt werden.

Gemäss der Erfindung sind die Arretierungsmittel eingerichtet, um mit dem Brühkolben-Element eine lösbare Klemmverbindung zu bilden. Demnach kann die Bewegung des Brühkolben-Elements in einer Freigabestellung der Arretierungsmittel weitgehend ungehindert erfolgen, während in einer Klemmstellung eine Bewegung des Brühkolben-Elements blockiert ist und erst nach Lösen der Arretierungsmittel möglich ist. Insbesondere die freie Bewegung des Brühkolben-Elements in Richtung Brühstellung und eine Arretierung in definierter Stellung kann mittels vorgesehener Aktivierungsmittel erreicht werden.

Hierfür umfassen die Arretierungsmittel einen um eine horizontale Achse schwenkbaren Arretierungshebel, der eine Passbohrung aufweist, durch welche die Kolbenstange geführt ist. Insbesondere kann der Arretierungshebel aus einem gehärteten Material gefertigt sein und weist eine gewisse Elastizität auf. Der Arretierungshebel ist in Bezug zu dem Brühkolben-Element und der Rahmenstruktur angeordnet, so dass sich die Kolbenstange des Brühkolben-Elements durch eine an dem Arretierungshebel vorgesehene Passbohrung mit geringem Spiel erstreckt, d.h. die Passbohrung die Kolbenstange eng umschliesst. Der Arretierungshebel ist an einem ersten Ende gelagert und ist ausgehend davon in einer Schwenkrichtung aus einer horizontalen Lage in eine Schrägstellung bringbar, in welcher das Brühkolben-Element in Position gehalten ist, d.h. in der die Kolbenstange in der Passbohrung klemmend arretiert ist. Der Arretierungshebel ist vorzugsweise so ausgebildet, dass dieser sich nicht durch die herrschenden Drücke verformt und eine Arretierung des Brühkolben-Elements weitgehend ohne Schlupf möglich ist. In einer bevorzugten Ausführungsform umfasst der Arretierungshebel mindestens zwei zueinander parallele Platten, welche somit eine Art gestufte Arretierung in den jeweiligen übereinander angeordneten Passbohrungen ermöglichen.

Ein zweites gegenüberliegendes Ende des Arretierungshebels ist frei beweglich, so dass der Arretierungshebel schwenkbar um seine einseitige Lagerstelle aus der horizontalen Lage in eine geneigte Stellung relativ zu der Kolbenstange bringbar ist. Ab einer bestimmten Winkelstellung des Arretierungshebels relativ zu der Kolbenstange verkantet sich die Kolbenstange in der Passbohrung bzw. den Passbohrungen und das Brühkolben-Element wird mittels einem gebildeten Reibgesperre in Position klemmend arretiert.

Aktivierungsmittel, welche in Wechselwirkung mit dem Arretierungshebel stehen, sind eingerichtet, um eine Arretierung des Brühkolben-Elements zu erreichen bzw. diese zu lösen. Die Aktivierungsmittel können mehrere Funktionselemente umfassen, welche einerseits eine Arretierung und andererseits eine Freigabe erlauben, d.h. die Arretierung zu lösen und damit das Brühkolben-Element freizugeben.

In einer Ausführungsform umfassen die Aktivierungsmittel eine Exzenteranordnung, welche in Wirkverbindung mit den Arretierungsmittel bzw. dem Arretierungshebel steht bzw. in eine Wirkverbindung bringbar ist. Die Exzenteranordnung kann in einer Ausführungsform einen Exzenter umfassen, welcher als eine um eine Drehwelle drehbare Steuerscheibe ausgebildet ist. Der Exzenter hat eine Umfangsfläche, mit welcher der Arretierungshebel die Arretierungsmittel in Kontakt bringbar sind, eventuell über dazwischen angeordnete Übertragungselemente. Der Exzenter ist um die Drehwelle mittels einer vorzugsweise steuerbaren Antriebseinheit drehbar. Bei Drehung konfiguriert die Umfangsfläche eine von einem Kreisbogen unterschiedliche Trajektorie. Bei Drehung des Exzenters um die Drehwelle kann der Arretierungshebel der Arretierungsmittel in abschnittsweise zur Anlage mit der Umfangsfläche des Exzenters gebracht werden, so dass der Arretierungshebel relativ zu der Kolbenstange des Brühkolben-Elements in eine Schrägstellung gebracht wird. In einer anderen Drehstellung des Exzenters, d.h. wenn dessen Umfangsfläche nicht in Kontakt mit dem Arretierungshebel steht, kann dieser aus der Schrägstellung bewegt werden. Alternativ können zwischen Exzenter und Arretierungshebel die Übertragungsmittel vorgesehen sein, welche eingerichtet sind, um derart mit dem Arretierungshebel zu wechselwirken, dass dieser aus bzw. in seine horizontale Lage bewegbar ist. Dies kann insbesondere vorteilhaft sein, falls die Einbausituation begrenzt ist.

Die Aktivierung der Aktivierungsmittel kann vorzugsweise mittels einer Antriebseinheit erfolgen und ist darüber hinaus mittels einer Schaltanordnung regelbar bzw. steuerbar. Mit einer von der Bewegung des Handhebels unabhängigen Aktivierung der Arretierungsmittel kann erreicht werden, dass das Brühkolben-Element in definierten Positionen gehalten wird. In einer Ausführungsform können die Aktivierungsmittel neben einer als Freigabemittel ausgebildete Exzenteranordnung ein Federelement umfassen, welches eingerichtet ist, um die Arretierungsmittel zu aktivieren. Insbesondere ist das Federelement mit dem zweiten freien Ende des Arretierungshebels verbindbar, so dass es mittels seiner Federkraft den Arretierungshebel in eine Schrägstellung bewegt, während der vorgesehene Exzenter eingerichtet ist, um den Arretierungshebel entgegen der Federkraft in seine horizontale Lage für eine Freigabe zu bewegen. Somit wird ein sehr schnelles Aktivieren der Arretierungsmittel erreicht, wobei eine Feststellung des Brühkolben-Elements unabhängig von der Bewegung des Handhebels ist.

Ferner bezieht sich die vorliegende Erfindung auf eine Espresso- und Kaffeemaschine, welche die erfindungsgemässe Brühgruppe einsetzbar ist. Die Espresso- und Kaffeemaschine umfasst des Weiteren eine Halterung, in welche der Siebträger einsetzbar ist, Mittel zur Erzeugung und Abgabe von heissem, unter Druck stehenden Wasser und dessen Zuführung in einen Brühraum, welcher von dem Siebträger und einem Verteilersieb eines Brühkolben-Elements der Brühgruppe begrenzt ist, ein Mahlwerk zur Erzeugung von Kaffeepulver, und eine Dosiereinrichtung zum Einbringen von Kaffeepulver in den in Halterung eingesetzten Siebträger.

### Kurzbeschreibung der Figuren

Eine vorteilhafte Ausführungsform der Erfindung wird im Folgenden anhand der Zeichnung dargestellt, die lediglich zur Erläuterung dient und nicht einschränkend auszulegen ist. Aus der Zeichnung offenbar werdende Merkmale der Erfindung sollen als zur Offenbarung der Erfindung gehörend betrachtet werden. In der Zeichnung zeigen:
Fig. 1 eine schematische Schnittdarstellung einer mechanischen Brühgruppe in einer ersten Position;
Fig. 2 eine schematische Schnittdarstellung der mechanischen Brühgruppe gemäss Figur 1 in einer zweiten Position;
Fig.3 eine schematische Schnittdarstellung der mechanischen Brühgruppe gemäss Figur 1 in einer dritten Position; und
Fig. 4 eine Detailansicht der Arretierungsmittel der mechanischen Brühgruppe.

### Detaillierte Figurenbeschreibung

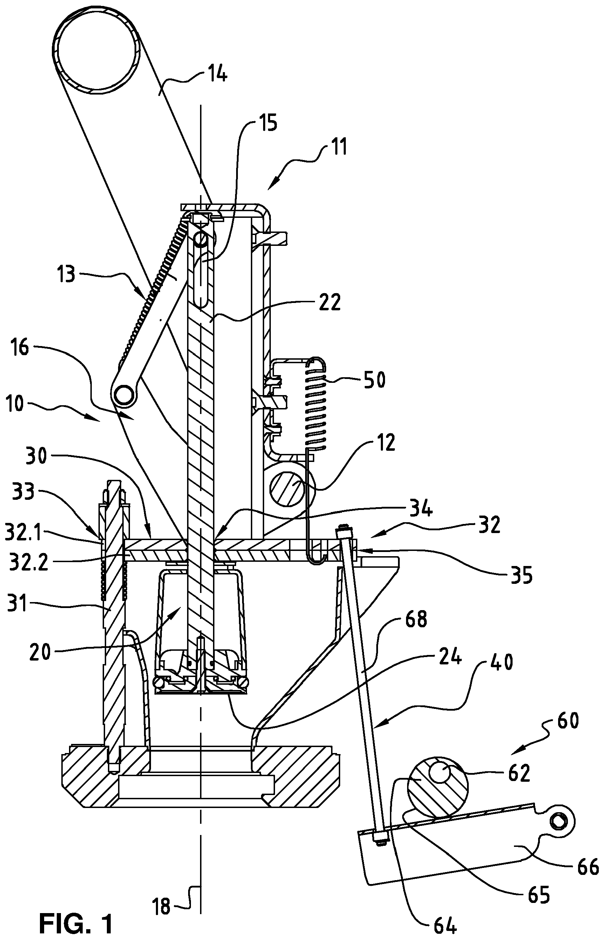

Figur 1 ist eine schematische Schnittdarstellung einer mechanischen Brühgruppe 10, bei welcher zur Vereinfachung nur diejenigen Elemente dargestellt sind, welche zur Erläuterung der Funktionsweise der mechanischen Brühgruppe 10 erforderlich sind.

Die mechanische Brühgruppe 10 umfasst eine Rahmenstruktur, von welcher nur ein Rahmenabschnitt 11 dargestellt ist, an welcher ein Handhebel 14 um eine Drehachse 12 drehbar gelagert ist. Der Handhebel 14 kann insbesondere gegen eine Widerstandskraft eines als Federelement ausgebildeten Rückstellelements 13 von einer Startstellung, z.B. einer oberen Stellung, in eine untere Stellung bewegt werden. Ferner umfasst die mechanische Brühgruppe 10 ein Brühkolben-Element 20, welches mittels eines Hebelmechanismus 16 in Wirkverbindung mit dem Handhebel 14 steht und an dessen Bewegung gekoppelt ist. Der Hebelmechanismus 16 kann als Kniehebelmechanismus ausgebildet sein, so dass eine Schwenkbewegung des Handhebels 14 um die Drehachse 12 über Verbindungselemente des Kniehebelmechanismus auf das Brühkolben-Element 20 übertragbar ist. Insbesondere ist die Bewegung des Brühkolben-Elements 20 geführt, beispielsweise mittels einer vorgesehenen Kulissenführung 15. Demnach ist an die Bewegung des Handhebels 14 die Bewegung des Brühkolben-Elements 20 gekoppelt, welches entsprechend zwischen einer ersten Position, wie dargestellt in Figur 1, und zumindest einer zweiten Position entlang einer vertikalen Achse 18 bewegbar ist.

Das Brühkolben-Element 20 umfasst eine Kolbenstange 22 und ein Verteilersieb 24. Das Verteilersieb 24 ist an einem unteren Ende einer Kolbenstange 22 lösbar verbunden und derart eingerichtet, dass es zumindest in der zweiten Position des Brühkolben-Elements 20 mit einem in einer Halterung eingesetzten Siebträger einen Brühraum (nicht dargestellt) dichtend begrenzt, wobei entsprechende beispielsweise radial wirkende Dichtmittel vorgesehen sind. In der sogenannten Brühstellung gelangt heisses, unter Druck stehendes Brühwasser durch das Verteilersieb 24 in den Brühraum, wo dieses durch das in dem Brühraum eingefüllte Kaffeemehl gedrückt wird, welches in den Siebträger in offener Stellung einfüllbar ist.

Des Weiteren sind Arretierungsmittel 30 vorgesehen, welche ausgebildet sind, um das Brühkolben-Element 20 in einer nahezu stufenlos einstellbaren Position entlang der vertikalen Achse 18 zu halten. Dies ist dann von Vorteil, wenn beispielsweise vor dem eigentlichen Brühvorgang eine Verdichtung des in dem Siebträger eingefüllten Kaffeemehls mit einer definierbaren Temperkraft getempert bzw. verdichtet wird.

Die Arretierungsmittel 30 sind ausgebildet, um mit dem Brühkolben-Element 20 eine lösbare Klemmverbindung zu bilden. So ist das Brühkolben-Element 20 in einer Freigabestellung der Arretierungsmittel 30 frei beweglich entlang der vertikalen Achse 18 und in einer als Klemmstellung bezeichneten Position der Arretierungsmittel 30 blockiert.

Die Arretierungsmittel 30 umfassen einen Arretierungshebel 32. Der Arretierungshebel 32 ist an einem ersten Ende 33 an einer Achse 31 gelagert und weist ein freies zweites Ende 35 auf, so dass er aus einer horizontalen Lage in eine Schrägstellung bringbar ist. Insbesondere greifen an einem zweiten freien Ende 35 des Arretierungshebels 32 Aktivierungsmittel 40 an, die nachfolgend beschrieben werden.

An dem Arretierungshebel 32 ist eine Passbohrung 34 vorgesehen, durch welche die Kolbenstange 22 des Brühkolben-Elements 20 geführt ist. In der Ausführungsform gemäss Figur 1 wird der Arretierungshebel 32 durch zwei zueinander parallele Platten 32.1, 32.2 gebildet, welche jeweils im Bereich der Passbohrung 34 eine Klemmverbindung mit der Kolbenstange 22 ausbilden können. Durch diese Mehrstufigkeit ist demnach eine mehrstufige Arretierung und Rückstellung möglich.

Um die Arretierungsmittel 30 in eine Schrägstellung bzw. in eine Freigabestellung zu bewegen sind die Aktivierungsmittel 40 vorgesehen. Die Aktivierungsmittel 40 umfassen in der dargestellten Ausführungsform ein Federelement 50, welches an dem zweiten Ende 35 des Arretierungshebels 32 angreift und eingerichtet ist, um mittels seiner Federkraft den Arretierungshebel 32 in eine Schrägstellung zu bewegen. Demnach ist das Brühkolben-Element 20 stets arretiert.

Zur Freigabe der arretierenden Stellung ist eine Exzenteranordnung 60 vorgesehen. Diese Exzenteranordnung 60 umfasst in der dargestellten Ausführungsform einen um eine Drehwelle 62 drehbar angeordneten Exzenter 64, welcher eine Umfangsfläche 65 umfasst. Die Umfangsfläche 65 konfiguriert bei Drehung um die Drehachse 62 eine von einem Kreisbogen abweichende Trajektorie. In der dargestellten Ausführungsform steht die Umfangsfläche des Exzenters 64 mittels eines Wippenelements 66 und eines daran angeordneten Übertragungselements 68 in Wirkverbindung mit dem Arretierungshebel 32. Je nach Stellung des Exzenters 64 wird der Arretierungshebel 32 entgegen der Federkraft des Federelements 50 in seine horizontale Lage bewegt, in welcher das Brühkolben-Element freigegeben ist, d.h. die Kolbenstange 22 ist in der Passbohrung 34 frei beweglich.

In der dargestellten Ausführungsform ist das Federelement 50 ausgebildet und angeordnet, um den Arretierungshebel 32 unmittelbar in eine Schrägstellung zu stellen, wenn die Wirkverbindung zwischen Exzenter 60 und Arretierungshebel 32 unterbrochen ist.

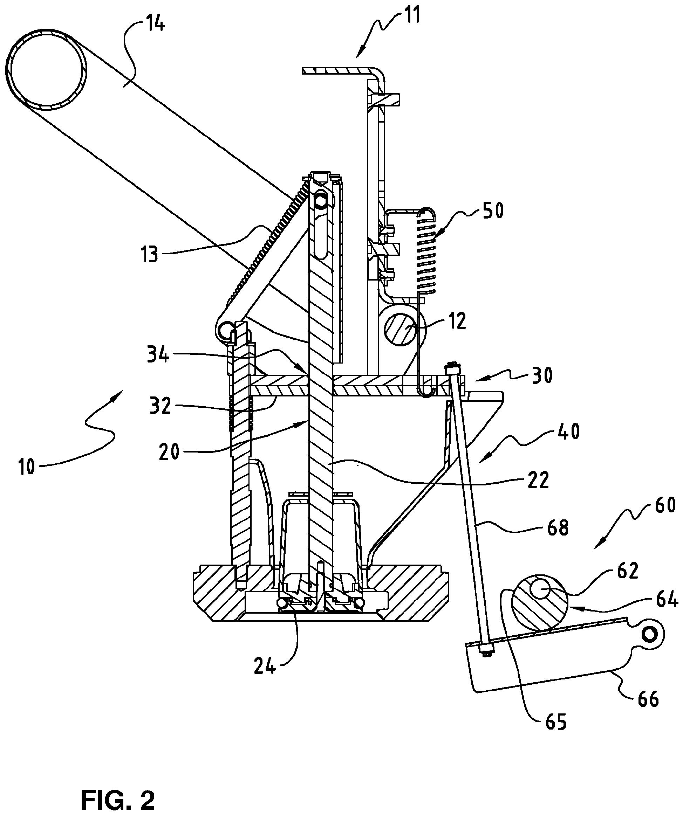

In Figur 2 ist die mechanische Brühgruppe 10 in einer zweiten Position dargestellt, wobei erkennbar ist, dass sich der Handhebel 14 aus der Startstellung nach unten bewegt und entsprechend das Brühkolben-Element 20 in Richtung Siebträger verschoben wurde. Auch in Figur 2 befinden sich die Arretierungsmittel 30 in einer Freigabestellung, in welcher die Kolbenstange 22 in der Passbohrung 34 verschieblich aufgenommen ist. Hierfür wirkt die Exzenteranordnung 60 der Federkraft des Federelements 50 derart entgegen, dass sich der Arretierungshebel 32 in einer horizontalen Lage befindet.

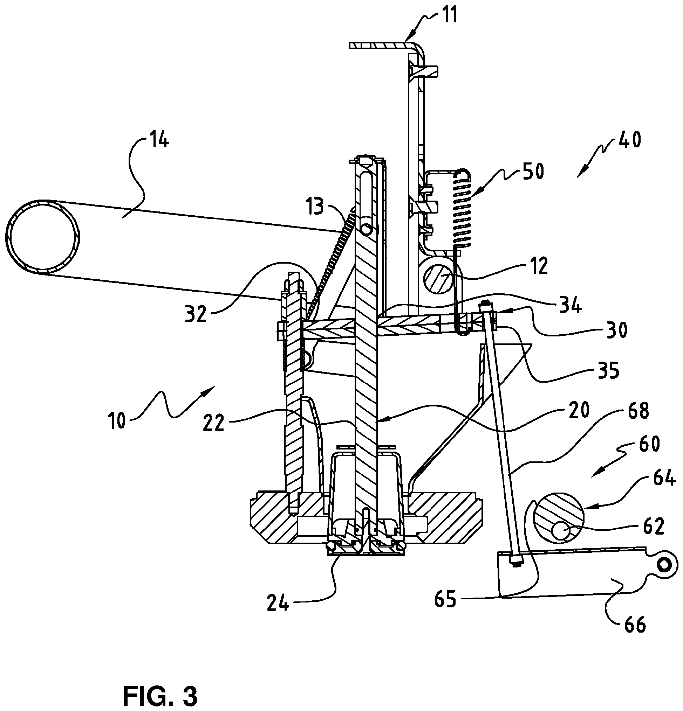

In Figur 3 ist die mechanische Brühgruppe 10 darstellt, wobei der Handhebel 14 in einer unteren Position dargestellt ist, wobei sich das Brühkolben-Element 20 soweit in einen Siebträger verschoben hat, dass es mit diesem einen abgedichteten Brühraum für den eigentlichen Brühvorgang bildet. In dieser Brühstellung sind die Aktivierungsmittel 40 derart aktiviert, dass der Arretierungshebel 32 in eine Schrägstellung verbracht ist und ein Reibgesperre für die Kolbenstange 22 bildet. Erkennbar ist, dass der Exzenter 64 der Exzenteranordnung 60 eine Drehstellung um die Drehachse 62 einnimmt, in welcher keine mittelbare Wechselwirkung zu dem Arretierungshebel 32 besteht. Die Federkraft des Federelements 50 zieht demnach das zweite freie Ende 35 des Arretierungshebels 32 nach oben und somit nimmt der Arretierungshebel 32 eine Schrägstellung ein.

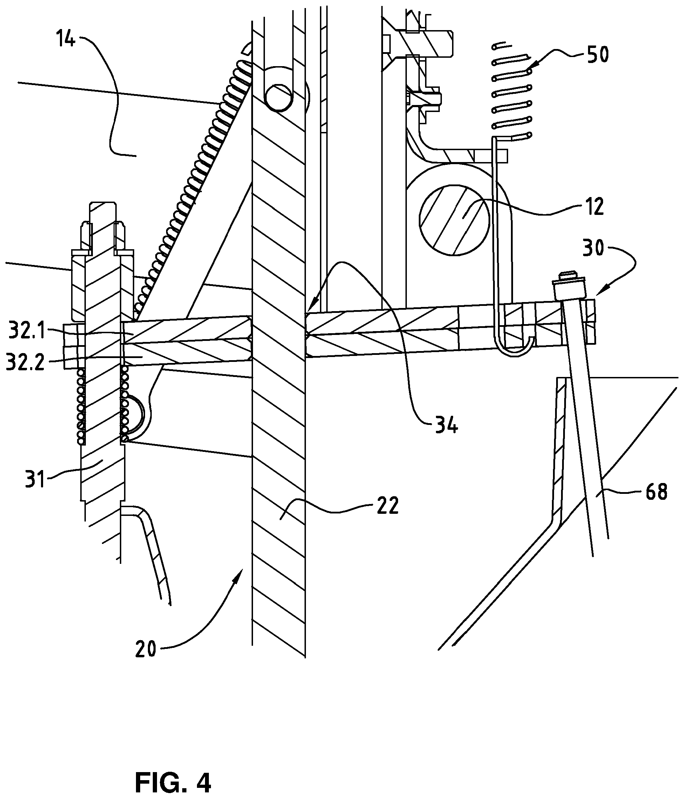

In Figur 4 ist eine Detailansicht der Arretierungsmittel 30 in einer Arretierungsstellung. Hierbei wird durch das an dem Arretierungshebel 32 angreifende Federelement, dieser in Schrägstellung gebracht, wobei gleichzeitig der Exzenter 60 nicht in Wirkverbindung mit dem Arretierungshebel 32 steht. Die in der Passbohrung 34 geführte Kolbenstange steht in Klemmverbindung mit der ersten Arretierungsplatte 32.1 und der zweiten Arretierungsplatte 32.2, so dass eine mehrstufige Klemmwirkung erzielt ist.

## Patentansprüche

1. Brühgruppe (10) für eine Espresso- und Kaffeemaschine, umfassend
- eine Rahmenstruktur (11),
- einen Handhebel (14), welcher an der Rahmenstruktur (11) drehbar um eine Drehachse (12) gelagert ist,
- ein Brühkolben-Element (20), welches mittels eines Hebelmechanismus (16) in Wirkverbindung mit dem Handhebel (14) steht, wobei das Brühkolben-Element (20) zwischen einer ersten Position und mindestens einer zweiten Position entlang einer vertikalen Achse (18) gekoppelt an die Bewegung des Handhebels (14) bewegbar ist, und das Brühkolben-Element (20) umfasst
- ein Verteilersieb (24), welches in der zweiten Position des Brühkolben-Elements (20) mit einem in einer Halterung einsetzbaren Siebträger einen Brühraum begrenzt und heisses unter Druck stehendes Brühwasser durch das Verteilersieb (24) in den Brühraum einführbar ist, und
- eine Kolbenstange (22), an welcher das Verteilersieb (24) verbindbar ist, und
- Arretierungsmittel (30) vorgesehen sind, welche ausgebildet sind, um das Brühkolben-Element (20) in mindestens einer einstellbaren Position entlang der vertikalen Achse (18) zu halten,
**dadurch gekennzeichnet, dass**
die Arretierungsmittel (30) mit dem Brühkolben-Element (20) eine lösbare Klemmverbindung bilden, wobei die Arretierungsmittel (30) einen an einem ersten Ende (33) gelagerten Arretierungshebel (32) mit einer Passbohrung (34) umfassen, durch welche die Kolbenstange (22) geführt ist.

2. Brühgruppe (10) nach Anspruch 1, **dadurch gekennzeichnet, dass** die mindestens eine einstellbare Position der zweiten Position des Brühkolben-Elements (20) entspricht, in welcher dieses in einer Pressstellung gehalten ist.

3. Brühgruppe (10) nach einem der vorhergehenden Ansprüche, **dadurch gekennzeichnet, dass** die Passbohrung (34) die Kolbenstange (22) mit geringem Spiel umschliesst.

4. Brühgruppe (10) nach einem der vorhergehenden Ansprüche, **dadurch gekennzeichnet, dass** der Arretierungshebel (32) in einer Schwenkrichtung aus einer horizontalen Lage in eine Schrägstellung bringbar ist, in welcher das Brühkolben-Element (20) in Position gehalten ist.

5. Brühgruppe (10) nach einem der vorhergehenden Ansprüche, **dadurch gekennzeichnet, dass** der Arretierungshebel (32) zwei parallel zueinander angeordnete Platten (32.1, 32.2) umfasst, welche jeweils die Passbohrung (34) aufweisen, um die Kolbenstange (22) eng zu umschliessen.

6. Brühgruppe (10) nach einem der vorhergehenden Ansprüche, **dadurch gekennzeichnet, dass** die Arretierungsmittel (30) Aktivierungsmittel (50) umfassen, um die Arretierung des Brühkolben-Elements (20) zu aktivieren und/oder zu lösen.

7. Brühgruppe (10) nach Anspruch 6, **dadurch gekennzeichnet, dass** die Aktivierungsmittel (30) eine Exzenteranordnung (60) mit einem um eine Drehwelle (62) drehbaren Exzenter (64), eine Umfangsfläche (65) aufweisend, umfassen, wobei die Umfangsfläche (65) bei Drehung eine von einem Kreisbogen unterschiedliche Trajektorie konfiguriert.

8. Brühgruppe (10) nach Anspruch 7, **dadurch gekennzeichnet, dass** der Exzenter (64) mittels Übertragungsmitteln (66, 68) mit dem Arretierungshebel (32) in Wechselwirkung bringbar ist, so dass dieser in Abhängigkeit der Drehstellung des Exzenters (64) in eine Freigabestellung und/oder eine arretierende Stellung bringbar ist.

9. Brühgruppe (10) nach einem der Ansprüche 7 oder 8, **dadurch gekennzeichnet, dass** die Exzenteranordnung (60) mittels einer steuerbaren Antriebseinheit aktivierbar ist.

10. Brühgruppe (10) nach einem der Ansprüche 7 bis 9, **dadurch gekennzeichnet, dass** die Aktivierungsmittel (30) ein mit dem Arretierungshebel (32) verbindbares Federelement (50) umfassen, welches ausgebildet und angeordnet ist, um den Arretierungshebel (32) in eine arretierende Stellung zu bewegen, und die Exzenteranordnung (60) ausgebildet und angeordnet ist, um den Arretierungshebel (32) in eine horizontale Lage zu bewegen.

11. Espresso- und Kaffeemaschine, umfassend
- eine Brühgruppe (10) nach einem der vorhergehenden Ansprüche,
- eine Halterung, in welche der Siebträger einsetzbar ist,
- Mittel zur Erzeugung und Abgabe von heissem, unter Druck stehenden Wasser und dessen Zuführung in einen Brühraum, welcher von dem Siebträger und dem Verteilersieb (24) des Brühkolben-Elements (20) der Brühgruppe (10) begrenzt ist,
- Mahlwerk zur Erzeugung von Kaffeepulver, und
- eine Dosiereinrichtung zum Einbringen von Kaffeepulver in den in der Halterung eingesetzten Siebträger.

## Claims

1. Brewing unit (10) for an espresso and coffee machine, comprising
▪ a frame structure (11),
▪ a hand lever (14) which is mounted on the frame structure (11) in a way rotatable about an axis of rotation (12),
▪ a brewing piston element (20) which is operatively connected to the hand lever (14) by means of a lever mechanism (16), whereby the brewing piston element (20), coupled to the movement of the hand lever (14), is movable between a first position and at least one second position along a vertical axis (18), whereby the brewing piston element (20) comprises
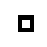 a distributor sieve (24) which, in the second position of the brewing piston element (20), and together with a filter support which is able to be inserted into a holding device, delimits a brewing chamber, and hot pressurized brewing water is able to be introduced into the brewing chamber through the distributor sieve (24), and
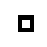 a piston rod (22) to which the distributor sieve (24) is connectible, and
locking means (30) are provided, which are designed to hold the brewing piston element (20) in at least one adjustable position along the vertical axis (18),
**characterized in that** the locking means (30) form a releasable clamping connection with the brewing piston element (20), whereby the locking means (30) comprise a locking lever (32) borne at a first end (33) and having a fitting bore (34) through which the piston rod (22) is guided.

2. Brewing unit (10) according to claim 1, **characterized in that** the at least one adjustable position corresponds to the second position of the brewing piston element (20), in which this element is held in a pressing position.

3. Brewing unit (10) according to one of the preceding claims, **characterized in that** the fitting bore (34) surrounds the piston rod (22) with minimal play.

4. Brewing unit (10) according to one of the preceding claims, **characterized in that** the locking lever (32) is able to be brought in a pivoting direction from a horizontal position into an inclined position in which the brewing piston element (20) is held in position.

5. Brewing unit (10) according to one of the preceding claims, **characterized in that** the locking lever (32) comprises two plates (32.1, 32.2) arranged parallel to each other, each having the fitting bore (34) to closely surround the piston rod (22).

6. Brewing unit (10) according to one of the preceding claims, **characterized in that** the locking means (30) comprise activating means (50) for activating and/or releasing the locking of the brewing piston element (20).

7. Brewing unit (10) according to claim 6, **characterized in that** the activation means (30) comprise an eccentric arrangement (60) having an eccentric (64) rotatable about a rotary shaft (62) and having a circumferential surface (65), whereby the circumferential surface (65) configures, upon rotation, a trajectory different from an arc of a circle.

8. Brewing unit (10) according to claim 7, **characterized in that** the eccentric (64) is able to be brought into interaction with the locking lever (32) by means of transmission means (66, 68), so that this locking lever (32) is able to be brought into a release position and/or a locking position as a function of the rotational position of the eccentric (64).

9. Brewing unit (10) according to one of the claims 7 or 8, **characterized in that** the eccentric arrangement (60) is able to be activated by means of a controllable drive unit.

10. Brewing unit (10) according to one of the claims 7 to 9, **characterized in that** the activating means (30) comprise a spring member (50) connectible to the locking lever (32), which spring member is designed and arranged to move the locking lever (32) into a locking position, and the eccentric arrangement (60) is designed and arranged to move the locking lever (32) into a horizontal position.

11. Espresso and coffee machine, comprising
▪ a brewing unit (10) according to one of the preceding claims,
▪ a holding device into which the filter support is insertable,
▪ means for generating and delivering hot pressurized water and feeding it into a brewing chamber delimited by the filter support and the distributor sieve (24) of the brewing piston element (20) of the brewing unit (10),
▪ grinder for producing coffee powder, and
▪ a dosing device for introducing coffee powder into the filter support inserted in the holding device.

## Revendications

1. Unité d'infusion (10) pour une machine à espresso et à café, comprenant
- une structure de cadre (11),
- un levier à main (14) monté sur la structure du cadre (11) de façon à pouvoir tourner autour d'un axe de rotation (12),
- un piston de brassage (20) qui est relié de manière opérationnelle au levier à main (14) au moyen d'un mécanisme de levier (16), de telle sorte que le piston de brassage (20), couplé au mouvement du levier à main (14), soit mobile entre une première position et au moins une deuxième position le long d'un axe vertical (18), le piston de brassage (20) comprenant
- un filtre de distribution (24) qui, dans la deuxième position du piston de brassage (20), et avec un support de filtre pouvant être inséré dans un dispositif de maintien, délimite une chambre de brassage, et de l'eau chaude sous pression pouvant être introduite dans la chambre de la chambre de brassage à travers le filtre de distribution (24), et
- une tige de piston (22) à laquelle le filtre de distribution (24) peut être raccordé, et
des moyens de verrouillage (30), qui sont conçus pour maintenir le piston de brassage (20) dans au moins une position réglable le long de l'axe vertical (18), étant prévus par ailleurs,
**caractérisé en ce que** les moyens de verrouillage (30) forment une liaison de serrage réversible avec le piston de brassage (20), les moyens de verrouillage (30) comprenant un levier de verrouillage (32) porté à une première extrémité (33) et ayant un alésage d'ajustement (34) à travers lequel la tige de piston (22) est guidée.

2. Unité d'infusion (10) selon la revendication 1, **caractérisée en ce que** ladite au moins une position réglable correspond à la deuxième position du piston de brassage (20), dans laquelle cet élément est maintenu en compression.

3. Unité d'infusion (10) selon l'une des revendications précédentes, **caractérisée en ce que** l'alésage d'ajustement (34) entoure la tige de piston (22) avec un jeu minimal.

4. Unité d'infusion (10) selon l'une des revendications précédentes, **caractérisée en ce que** le levier de verrouillage (32) peut être amené dans une direction pivotante d'une position horizontale à une position inclinée dans laquelle le piston de brassage (20) est maintenu en position.

5. Unité d'infusion (10) selon l'une des revendications précédentes, **caractérisée en ce que** le levier de verrouillage (32) comprend deux plaques (32.1, 32.2) disposées parallèlement l'une à l'autre, chacune présentant l'alésage de fixation (34) pour entourer étroitement la tige de piston (22).

6. Unité d'infusion (10) selon l'une des revendications précédentes, **caractérisée en ce que** les moyens de verrouillage (30) comprennent des moyens d'activation (50) pour activer et/ou libérer le verrouillage du piston de brassage (20).

7. Unité d'infusion (10) selon la revendication 6, **caractérisée en ce que** les moyens d'activation (30) comprennent un dispositif excentrique (60) comportant un excentrique (64) rotatif autour d'un arbre rotatif (62) et présentant une surface circonférentielle (65), la surface circonférentielle (65) effectuant, lors de la rotation, une trajectoire différente d'un arc de cercle.

8. Unité d'infusion (10) selon la revendication 7, **caractérisée en ce que** l'excentrique (64) peut être mis en interaction avec le levier de verrouillage (32) au moyen de moyens de transmission (66, 68), de telle sorte que ce levier de verrouillage (32) puisse être amené dans une position de déverrouillage et/ou de verrouillage en fonction de la position de rotation de l'excentrique (64).

9. Unité d'infusion (10) selon l'une des revendications 7 ou 8, **caractérisée en ce que** le dispositif excentrique (60) peut être activé au moyen d'une unité d'entraînement pilotable.

10. Unité d'infusion (10) selon l'une des revendications 7 à 9, **caractérisée en ce que** les moyens d'activation (30) comprennent un élément à ressort (50) raccordable au levier de verrouillage (32), qui est conçu et agencé pour amener le levier de verrouillage (32) en position de verrouillage, et le dispositif excentrique (60) est conçu et agencé pour amener le levier de verrouillage (32) dans une position horizontale.

11. Machine à café et à espresso, comprenant
- une unité de brassage (10) selon l'une des revendications précédentes,
- un dispositif de maintien dans lequel le support du filtre peut être inséré,
- des moyens pour générer et délivrer de l'eau chaude sous pression et l'introduire dans une chambre de brassage délimitée par le support de filtre et le filtre de distribution (24) du piston de brassage (20) de l'unité de brassage (10),
- un moulin pour produire de la poudre de café, et
- un dispositif de dosage pour introduire le café en poudre dans le support du filtre inséré dans le dispositif de maintien.
